(19) Europäisches Patentamt
European Patent Office
Office européen des brevets

(11)  **EP 3 514 571 B1**

(12)  **FASCICULE DE BREVET EUROPEEN**

(45) Date de publication et mention
de la délivrance du brevet:
**09.09.2020   Bulletin 2020/37**

(51) Int Cl.:
**G01S 13/66** (2006.01)

(21) Numéro de dépôt: **19150145.1**

(22) Date de dépôt: **03.01.2019**

(54)  **PROCEDE DE PISTAGE D'UNE CIBLE AERIENNE, ET RADAR METTANT EN OEUVRE UN TEL PROCEDE**

ORTUNGSVERFAHREN EINES LUFTZIELKÖRPERS, UND RADAR ZUR UMSETZUNG DIESES VERFAHRENS

METHOD FOR TRACKING AN AERIAL TARGET, AND RADAR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.01.2018   FR 1800064**

(43) Date de publication de la demande:
**24.07.2019   Bulletin 2019/30**

(73) Titulaire: **THALES**
**92400 Courbevoie (FR)**

(72) Inventeurs:
• **BONNETAT, Antoine**
**78990 Elancourt (FR)**
• **GILLIOT, Adrien**
**78990 Elancourt (FR)**
• **GOUMAND, Dominique**
**78990 Elancourt (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 1 351 069       US-A1- 2006 224 318**
**US-A1- 2009 087 029**

• **PILTE MARION ET AL: "An innovative nonlinear filter for radar kinematic estimation of maneuvering targets in 2D", 2017 18TH INTERNATIONAL RADAR SYMPOSIUM (IRS), GERMAN INSTITUTE OF NAVIGATION-DGON, 28 juin 2017 (2017-06-28), pages 1-10, XP033142228, DOI: 10.23919/IRS.2017.8008156**
• **RAMSEY FARAGHER: "Understanding the Basis of the Kalman Filter Via a Simple and Intuitive Derivation [Lecture Notes]", IEEE SIGNAL PROCESSING MAGAZINE, IEEE SERVICE CENTER, PISCATAWAY, NJ, US, vol. 29, no. 5, 1 septembre 2012 (2012-09-01), pages 128-132, XP011458705, ISSN: 1053-5888, DOI: 10.1109/MSP.2012.2203621**

**Description**

La présente invention concerne un procédé de pistage d'une cible aérienne. Elle concerne également un radar apte à mettre en œuvre un tel procédé. Le domaine technique de l'invention est celui de la poursuite de cibles aériennes aptes à manœuvrer, dites manœuvrantes. Plus particulièrement, le domaine technique de l'invention est adapté à la poursuite de cibles exécutant une cinématique proche d'une courbe gauche dans l'espace tridimensionnel (évasive descendante, vrille, etc.). L'invention s'applique par exemple pour des radars aéroportés air/air, des radars sol/air ou de poursuite. L'invention peut également s'appliquer pour la poursuite de cibles se déplaçant dans un espace tridimensionnel dont des paramètres cinématiques de la cible sont mesurés à l'aide d'un capteur radar.

Dans le cadre de la poursuite de cibles aériennes, les traitements des signaux sont basés sur des méthodes d'estimations bayésiennes, telles que le filtre de Kalman. Ces traitements estiment des informations d'état des cibles à partir :

- d'une part des mesures données par le traitement radar et dites informations *a posteriori* ;
- d'autre part, d'un modèle d'état sélectionné et paramétré en fonction des caractéristiques de la cible à poursuivre et fournissant des informations dites *a priori.*

En général, plus le modèle est propre à un mode particulier de la cinématique réelle de la cible, plus l'estimation des paramètres d'état de la cible peut être affinée avec précision dans le temps. Ainsi, un modèle adapté à plusieurs modes réels de cinématique de cibles fournit à l'estimateur Bayésien des informations *a priori* moins précises mais polyvalentes vis-à-vis des modes qu'il couvre.

Par exemple, dans le cas d'un mode où la cible est en mouvement circulaire uniforme contenu dans un plan horizontal (défini par deux des axes du repère d'état tridimensionnel), le modèle de Singer [1] et le modèle rotationnel [2] sont capables de fournir à l'estimateur Bayésien des informations suffisamment proches pour pister la cible. Cependant, le modèle rotationnel propre au mode de cinématique de la cible fournit à l'estimateur Bayésien des informations plus vraisemblables. Ceci s'explique par le fait que ce modèle rotationnel décrit l'évolution du vecteur vitesse de la cible par un couplage entre deux de ses paramètres associés aux axes du repère d'état et formant un plan horizontal. Cette description de l'évolution du vecteur vitesse est propre au mouvement circulaire de la cible contrairement au modèle de Singer qui considère que l'évolution des paramètres du vecteur vitesse est indépendante sur chaque axe du repère d'état.

En revanche, si la cible change de mode de cinématique et exécute une évasive curviligne toujours contenue dans le plan horizontal précédent, la description du modèle rotationnel [2] n'est plus adaptée, et les informations a priori fournies à l'estimateur Bayésien peuvent être suffisamment éloignées pour perdre la cible si l'accélération tangentielle est trop importante (puisque supposée nulle dans ce modèle). Au contraire, pour cette même cinématique le modèle de Singer reste adapté pour fournir des informations *a priori* suffisamment proches à l'estimateur Bayésien pour ne pas perdre le pistage de la cible.

Enfin, si la cible exécute une évasive curviligne ou circulaire autour d'un axe instantané non orthogonal au plan horizontal précédent, il est certain que le modèle rotationnel [2] n'est pas du tout adapté et que parmi les deux modèles, seul celui de Singer fournit des informations *a priori* suffisamment proches à l'estimateur Bayésien pour continuer à pister la cible.

Par ces exemples, on peut comprendre que le modèle de Singer est polyvalent (dans la limite d'un intervalle d'accélération de la cible à poursuivre défini par son paramétrage) et permet de suivre de nombreux modes de cinématique de cibles. Cependant, cette polyvalence se fait au détriment de la finesse des informations *a priori* fournit à l'estimateur Bayésien. La tendance pour les systèmes de poursuite de cibles est d'améliorer la précision de l'estimation en variant les modèles utilisés par l'estimateur Bayésien en fonction d'ensembles de modes de cinématique (algorithmes à multiple modèle). L'intérêt pour un système d'employer un modèle plus précis et adapté à un champ restreint de modes de cinématique de cibles (fournissant de bonnes informations *a priori* à l'estimateur Bayésien) est de permettre de relâcher les contraintes sur l'acquisition des informations radar *a posteriori* : par exemple en relâchant la cadence temporelle des mesures et donc de réduire la charge de calcul et de traitement.

Des solutions de l'état de l'art adaptées à la poursuite de cibles manoeuvrantes décrivant des trajectoires évasives sont connues. L'état de l'art est notamment basé sur un article de Rong Li et Jilkov [4] qui propose de faire la synthèse des modèles d'état existants de cibles manœuvrantes. Comme indiqué précédemment, une solution parmi les plus courantes utilise le modèle de Singer [1] pour décrire des cibles manoeuvrantes. Ce modèle est adapté aux cinématiques de cibles en mouvement avec une accélération variable, bornée et définie corrélée sur une fenêtre de temps. Il ne décrit aucune relation d'évolution entre les composantes du vecteur vitesse de la cible, c'est-à-dire qu'il les considère indépendantes sur chaque axe du repère d'état tridimensionnel. Il est donc polyvalent sur les modes de cinématique de cibles manœuvrantes d'accélération non nulle et il n'est pas spécifiquement adapté aux modes d'évasive (mouvement circulaire, curviligne dans un plan, aux vrilles et plus généralement aux courbes gauches).

Parmi l'état de l'art des systèmes de poursuites de cibles adaptés aux modes de cinématique de cibles en évasive on peut citer la solution utilisant le modèle rotationnel usuel [2] précité où le mouvement circulaire est contenu dans un plan horizontal défini par deux axes du repère associé. Cette solution est restreinte à une rotation sans accélération tangentielle (norme du vecteur vitesse constante) avec ou sans estimation de la vitesse angulaire de courbure. Une autre solution utilise un second modèle [5] étendant le précédent modèle aux mouvements curvilignes contenus dans un plan horizontal, donc ayant une accélération tangentielle non nulle. Ce modèle présente cependant l'inconvénient d'être basé sur une description fortement non linéaire conduisant à des hypothèses d'approximation qui rendent le système de poursuite de cibles inadapté aux cibles en évasive serrée. D'autres systèmes de poursuite de cibles sont connus, utilisant des modèles capables de décrire une trajectoire tridimensionnelle parfaitement circulaire selon un axe de rotation différent des axes du repère utilisé, utilisant notamment un modèle dit original proposé dans [4] construit sur l'hypothèse d'un vecteur accélération orthogonal au vecteur vitesse de la cible et un modèle [6] [7] [8] ajoutant l'hypothèse d'orthogonalité entre le vecteur vitesse et le vecteur de vitesse angulaire ainsi que la nullité de la dérivée de ce dernier. Enfin, un autre système de poursuite de cibles peut être mise en œuvre en utilisant le modèle [9] permettant de suivre une trajectoire curviligne plane sous hypothèse d'orthogonalité entre le vecteur vitesse et le vecteur vitesse angulaire. Mais un tel système est très complexe et coûteux en calculs.

Cependant, même si tous ces systèmes de poursuite de cibles utilisent des modèles proposant une description tridimensionnelle d'une cinématique de cibles en évasive, aucune ne permet la description d'une trajectoire non contenue dans un plan. C'est-à-dire que tous les modèles utilisés supposent une trajectoire de torsion nulle et ne sont donc pas adaptés aux trajectoires suivant des courbes gauches.

Un document de Marion Pilté et al « An innovative nonlinear filter for radar kinematic estimation of maneuvering targets in 2D » divulgue la poursuite d'une cible décrivant une trajectoire en deux dimensions.

Un document EP 1 351 069 A1 divulgue un procédé de détection multicibles. Un document US 2006/224318 A1 divulgue un procédé de prédiction de trajectoires et un document US 2009/087029 A1 divulgue une méthode pour prédire les mouvements d'une cible.

Un but de l'invention est notamment de pallier les inconvénients précités et permettre notamment la poursuite de cibles décrivant des courbes gauches.

A cet effet, l'invention a pour objet un procédé de pistage d'une cible par un radar comportant :

- une étape d'émission de signaux vers ladite cible ;
- une étape de réception des signaux rétrodiffusés par ladite cible, et d'obtention de mesures relatives à ladite cible à partir desdits signaux rétrodiffusés ;
- une étape d'estimation de paramètres de la trajectoire de ladite cible par application d'un filtre de Kalman étendu comportant une étape de prédiction et une étape de filtrage itérées selon un incrément temporel :

  - l'étape de prédiction ayant en entrée un premier vecteur d'état, issu de l'étape de filtrage, contenant les coordonnées x,y,z de la position de ladite cible dans un repère absolu, les composantes $t_x$, $t_y$, $t_z$, $n_x$, $n_y$, $n_z$, $b_x$, $b_y$, $b_z$ des vecteurs de base d'un repère de Frenet lié à ladite cible, la courbure $\kappa$ et la torsion $\tau$ de ladite trajectoire, la norme $v$ de la vitesse de ladite cible et l'accélération tangentielle $a_T$ à ladite trajectoire ;
  - l'étape de filtrage, ayant en entrée :

    i. un deuxième vecteur d'état, issu de l'étape de prédiction, contenant les coordonnées de position $x,y,z$, de vitesse $\dot{x},\dot{y},\dot{z}$, d'accélération $\ddot{x},\ddot{y},\ddot{z}$ et de dérivée de l'accélération $\dddot{x}, \dddot{y}, \dddot{z}$ de ladite cible dans ledit repère absolu ;
    ii. lesdites mesures relatives à la cible échantillonnées selon ledit incrément temporel ;

le vecteur d'état issu de l'étape de filtrage comportant les paramètres estimés de ladite trajectoire.

Dans un mode de mise en œuvre particulier, ledit procédé comporte en outre :

- une étape de transformation, dite 16 vers 12, transformant les seize composantes du premier vecteur d'état issu de ladite étape de prédiction en douze composantes formant le deuxième vecteur d'état ;
- une étape, dite 12 vers 16, transformant les douze composantes du deuxième vecteur d'état issu de ladite étape de filtrage en seize composantes formant le premier vecteur d'état.

Le premier vecteur d'état en sortie de ladite étape, dite 12 vers 16, fournit par exemple les paramètres estimés de ladite trajectoire.

Lesdites mesures relatives à la cible sont par exemple :

- la distance relative entre ledit radar et ladite cible ;

- le gisement et le site associés à la direction de ladite cible par rapport audit radar ;
- la vitesse radiale relative de ladite cible par rapport audit radar.

Dans un mode de mise en œuvre possible :

- l'étape de prédiction a en entrée une première matrice de covariance, issue de l'étape de filtrage ;
- l'étape de filtrage, a en entrée :

  • une deuxième matrice de covariance, issue de l'étape de prédiction ;
  • une matrice de covariance des bruits de mesure.

Les composantes du premier vecteur d'état en sortie de l'étape de prédiction, échantillonnées à un instant k, sont par exemple fonction des composantes du premier vecteur d'état en entrée de l'étape de filtrage, échantillonnées à l'instant précédent k-1 :

- les coordonnées de position *x,y,z* de ladite cible dans ledit repère absolu évoluant entre l'instant k - 1 et l'instant k comme l'évolution de position de ladite cible par rapport aux vecteurs de ladite base de Frenet à l'instant k - 1, ladite évolution de position étant fonction de la courbure $\kappa$ de la trajectoire, de la torsion $\tau$ de la trajectoire, de la norme *v* de la vitesse et de l'accélération tangentielle $a_T$ à la trajectoire de ladite cible à l'instant k - 1, et du temps $T_r$ entre les deux instants k - 1, k ;
- les composantes $t_x, t_y, t_z, n_x, n_y, n_z, b_x, b_y, b_z$ des vecteurs de base dudit repère de Frenet évoluant entre l'instant k - 1 et l'instant k en fonction de la courbure $\kappa$ de la trajectoire, de la torsion $\tau$ de la trajectoire, de la norme *v* de la vitesse et de l'accélération tangentielle $a_T$ à la trajectoire de ladite cible à l'instant k - 1, et du temps $T_r$ entre les deux instants k - 1, k ;
- la courbure $\kappa$ de la trajectoire et la torsion $\tau$ de la trajectoire restant inchangés entre l'instant k - 1 et l'instant k, et la norme *v* de la vitesse étant transformée en $v + T_r \cdot a_T$.

Ledit incrément temporel varie par exemple d'une itération à l'autre.
L'invention a également pour objet un radar apte à mettre en œuvre un tel procédé.
D'autres caractéristiques et avantages de l'invention apparaîtront à l'aide de la description qui suit, faite en regard de dessins annexés qui représentent :

- La figure 1, une situation de poursuite d'une cible par un radar aéroporté ;
- La figure 2, une illustration des signaux d'entrée et de sortie du procédé de pistage selon l'invention ;
- La figure 3, une illustration d'une trajectoire suivie par cible, repérée dans un repère absolu, un repère de Frenet mobile étant associé à la cible ;
- La figure 4, un exemple de mise en œuvre du procédé de pistage selon l'invention ;
- La figure 5, un autre exemple de mise en œuvre du procédé de pistage selon l'invention.

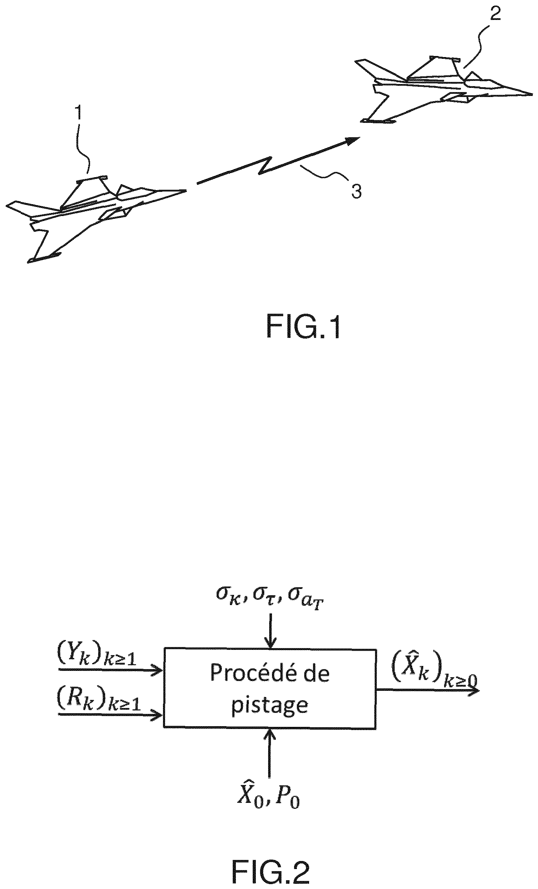

La figure 1 illustre une situation où un radar porté par un aéronef 1 poursuit une cible aérienne 2. Le radar aéroporté émet des signaux hyperfréquence 3 vers la cible 2. Les signaux rétrodiffusés par la cible sont captés par les moyens de réception du radar, puis numérisés et traités afin d'obtenir les mesures relatives à la cible, de façon connue de l'homme du métier. Les moyens de traitement du radar effectuent un pistage de la cible en estimant la trajectoire suivie par la cible.
Ce traitement de poursuite de cibles exécuté par le radar est basé sur un filtre de Kalman étendu [3] conformément aux radars de l'état de l'art. Cependant, comme cela sera décrit par la suite, l'invention combine avantageusement un modèle d'état particulier au filtre de Kalman.
Pour introduire le filtre de Kalman, on considère un système à espace d'état $(X_k, Y_k)_{k \geq 0}$ qui est un couple de processus, les deux processus étant les suivants :

- Un processus d'état $(X_k)_{k \geq 0}$ qui contient les informations recherchées sur la cible, notamment la position, la vitesse et l'accélération ;
- Un processus d'observations $(Y_k)_{k \geq 1}$ qui contient les informations observées de la cible, notamment les mesures effectuées par le radar de poursuite. Il est à noter qu'on ne dispose pas d'observation à l'instant k = 0.

On considère également le système non linéaire suivant :

$$X_k = f(X_{k-1}) + W_{k-1}$$

$$Y_k = h(X_k) + V_k$$

avec :

- $f$ la fonction de transition non linéaire définie par un modèle d'état ;
- $h$ la fonction d'observation non linéaire ;
- $W_k$ le bruit du modèle d'état défini par son espérance $E[W_k] = 0$, sa matrice de covariance

$$Q_k = E\left[W_k.W_k^T\right] \text{ et } E\left[W_k.W_j^T\right] = 0 \; \forall k \neq j \; ;$$

- $V_k$ le bruit d'observation défini par son espérance $E[V_k] = 0$, sa matrice de covariance

$$R_k = E\left[V_k.V_k^T\right] \text{ et } E\left[V_k.V_j^T\right] = 0 \; \forall k \neq j \; ; \quad W_k, V_k, X_0 \text{ sont indépendants.}$$

Un filtre de Kalman étendu, utilisé pour la poursuite d'une cible, réalise trois étapes :

- l'initialisation ;
- la prédiction ; et
- le filtrage.

L'initialisation n'est réalisée qu'une seule fois au démarrage du filtre de Kalman, puis la prédiction et le filtrage sont itérés à chaque nouvelle observation de la cible. En se référant aux notations précédentes, on peut décrire les différentes étapes.

L'initialisation réalise une estimation sans a priori du vecteur d'état à l'instant k=0 et de la matrice de covariance associée :

1. $\hat{X}_0 = E[X_0]$
2. $P_0 = E[(X_0 - E[X_0])(X_0 - E[X_0])^T]$

La prédiction réalise les opérations suivantes :

1. $\hat{X}_{k|k-1} = f(\hat{X}_{k-1|k-1})$
2.

$$P_0 = E\left[(X_0 - E[X_0])(X_0 - E[X_0])^T\right]$$

3. $P_{k|k-1} = F_{k-1} \, P_{k-1|k-1} \, F_{k-1}^T + Q_{k-1}$

$F_{k-1}$ étant la matrice Jacobienne de la fonction de transition $f(\cdot)$.

Le filtrage réalise les opérations suivantes :

1. $H_k = \left. \dfrac{\partial h(X)}{\partial X} \right|_{X = \hat{X}_{k|k-1}}$

2. $K_k = P_{k|k-1} \, H_k^T \left( H_k \, P_{k|k-1} \, H_k^T + R_k \right)^{-1}$

3. $\hat{X}_{k|k} = \hat{X}_{k|k-1} + K_k (Y_k - h(\hat{X}_{k|k-1}))$

4. $P_{k|k} = (I - K_k H_k) P_{k|k-1}$

où la formule dite de «Joseph» $P_{k|k} = (I - K_k H_k) P_{k|k-1} (I - K_k H_k)^T + K_k R_k K_k^T$

$H_k$ étant la matrice Jacobienne de la fonction d'observation $h(\cdot)$.

Les systèmes de poursuite de cibles utilisent classiquement un tel filtre de Kalman, estimateur bayésien particulier permettant d'estimer les informations recherchées. Différents types de modèles d'état peuvent être intégrés dans cet estimateur. Plusieurs de ces modèles ont été cités en introduction de la présente description. Les systèmes de poursuites de cibles intégrant ces différents modèles ne répondent pas au problème technique posé.

La figure 2 présente les signaux d'entrée et les signaux de sortie d'un procédé de poursuite de cibles selon l'invention, ou procédé de pistage.

Le procédé de pistage comporte une étape d'émission et de réception de signaux de mesures vers une cible à pister. Les signaux de mesures captés sont échantillonnés à des instants k. Le traitement radar prend en entrée à chaque instant k :

1. $(Y_k)_{k \geq 1}$ , les observations de la cible 2 à pister aux instants $k \geq 1$, comportant les signaux de mesures ;
2. $(R_k)_{k \geq 1}$ les matrices de covariances des bruits d'observations aux instants $k \geq 1$, associés aux signaux de mesure ;
3. $\sigma_\kappa$, $\sigma_\tau$ et $\sigma_{aT}$ les paramètres du procédé de pistage, autorisés par la dynamique de la cible, ces paramètres représentent les écarts-types des bruits de modèle respectivement sur la courbure de la trajectoire, sur la torsion de la trajectoire et sur l'accélération tangentielle à la trajectoire de la cible ;
4. $\hat{X}_0$ et $P_0$ les paramètres d'initialisation du procédé de pistage à l'instant k = 0, $\hat{X}_0$ et $P_0$ étant respectivement le vecteur d'état initial, comportant les informations de cibles recherchées, et la matrice de covariance initiale associée au vecteur d'état.

Le procédé de pistage fournit en sortie :
$(\hat{X}_k)_{k \geq 0}$ , représentant les états du système à pister aux instants k, ces informations permettant le pistage de la cible, une information fournie est par exemple la vitesse de la cible.

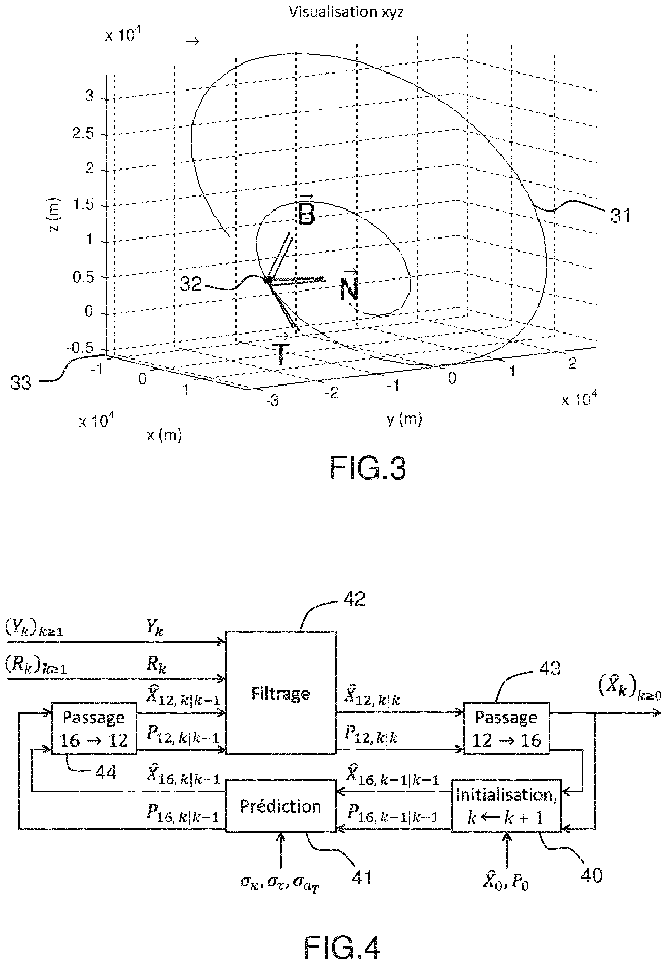

La figure 3 illustre un repère de Frenet $(\vec{T}, \vec{N}, \vec{B})$, utilisé par le procédé de pistage selon l'invention, pour décrire la trajectoire 31 de la cible dans l'espace. Ce repère est associé à la cible, représentée par un point 32. Le repère de Frenet est par ailleurs repéré dans un repère absolu 33.

Le repère de Frenet $(\vec{T}, \vec{N}, \vec{B})$ tridimensionnel est défini ainsi :

- $\vec{T}$ est le vecteur unitaire tangent à la trajectoire et colinéaire au vecteur vitesse $\vec{V}$ de la cible,
- $\vec{N}$ est le vecteur unitaire normal à la trajectoire et dirigé vers le centre du cercle osculateur à la trajectoire,
- $\vec{B}$ est le vecteur unitaire et orthogonal droit à $\vec{T}$ et $\vec{N}$.

Comme illustré sur la figure 3, le repère de Frenet se déplace avec la cible tout en vérifiant les propriétés décrites ci-dessus pour les vecteurs $\vec{T}, \vec{N}, \vec{B}$ (la figure 3 montre l'évolution du repère de Frenet entre deux instants). Une trajectoire curviligne peut être décrite en spécifiant la norme du vecteur vitesse $\vec{V}$ colinéaire à $\vec{T}$ dans la base de Frenet ainsi que la courbure $\kappa$ et la torsion $\tau$ de la cible. L'ajout du paramètre d'accélération tangentielle $a_T$ colinéaire à $\vec{T}$, permet de décrire une trajectoire de rayon de courbure variant au cours du temps, similaire à celle présentée en figure 3.

Le vecteur d'état $X_{16}$ utilisé par le modèle d'état particulier au procédé selon l'invention est :

$$X_{16} = \begin{bmatrix} x\ y\ z\ t_x\ t_y\ t_z\ n_x\ n_y\ n_z\ b_x\ b_y\ b_z\ \kappa\ \tau\ v\ a_T \end{bmatrix}^T$$

où :

- {x y z} est la position de la cible 32 dans le repère absolu ;
- {$t_x\ t_y\ t_z\ n_x\ n_y\ n_z\ b_x\ b_y\ b_z$} sont les composantes respectivement des vecteurs du repère de Frenet $\vec{T}, \vec{N}, \vec{B}$ exprimés dans le repère absolu ;
- $\kappa$ est la courbure et $\tau$ est la torsion, $\beta = \sqrt{\kappa^2 + \tau^2}$ étant utilisé par la suite ;
- $v$ et $a_T$, représentent respectivement la norme du vecteur vitesse $\vec{V}$ et l'accélération tangentielle à la trajectoire.

Le modèle d'état particulier à l'invention est basé sur la formulation de Frenet-Serret suivante, décrivant l'évolution des vecteurs de la base de Frenet $(\vec{T},\ \vec{N},\ \vec{B})$ en fonction du temps :

$$\begin{bmatrix} \dot{\vec{T}}(t) \\ \dot{\vec{N}}(t) \\ \dot{\vec{B}}(t) \end{bmatrix} = \begin{bmatrix} 0_3 & v\kappa\, I_3 & 0_3 \\ -v\kappa\, I_3 & 0_3 & v\tau\, I_3 \\ 0_3 & -v\tau\, I_3 & 0_3 \end{bmatrix} \begin{bmatrix} \vec{T}(t) \\ \vec{N}(t) \\ \vec{B}(t) \end{bmatrix} \qquad (1)$$

$0_3$ et $I_3$ représentent respectivement la matrice nulle, carrée d'ordre 3, et la matrice identité d'ordre 3.

A partir de la relation (1) précédente, on peut obtenir une description physique du système représenté par le vecteur d'état $X_{16}$ et son évolution dans le temps par sa dérivée par rapport au temps $\dot{X}_{16}$.

Le système dans l'espace d'état à temps continu est alors défini par la relation suivante :

$$\dot{X}_{16} = \begin{bmatrix} 0_3 & v\, I_3 & 0_3 & 0_3 & 0_3 & 0_{3,1} \\ 0_3 & 0_3 & v\kappa\, I_3 & 0_3 & 0_3 & 0_{3,1} \\ 0_3 & -v\kappa\, I_3 & 0_3 & v\tau\, I_3 & 0_3 & 0_{3,1} \\ 0_3 & 0_3 & -v\tau\, I_3 & 0_3 & 0_3 & 0_{3,1} \\ 0_3 & 0_3 & 0_3 & 0_3 & 0_3 & \begin{bmatrix}0\\0\\1\end{bmatrix} \\ 0_{1,3} & 0_{1,3} & 0_{1,3} & 0_{1,3} & 0_{1,3} & 0 \end{bmatrix} X_{16} = A\, X_{16} \qquad (2)$$

$0_{1,3}$ étant la matrice ligne $[0, 0, 0]$ et $0_{3,1}$ étant la matrice colonne $\begin{bmatrix}0\\0\\0\end{bmatrix}$.

Le procédé de pistage de l'invention utilise une version discrétisée de cette description à temps continu selon un incrément temporel. A cet effet, on utilise l'indice temporel k. Pour éviter toute confusion avec le vecteur tangent, on note $T_r$ le temps écoulé entre les instants $k$ et $(k + 1)$. Cet incrément temporel $T_r$ n'est pas nécessairement constant, il peut avantageusement varier d'une itération à l'autre.

La figure 4 illustre un exemple de traitement mettant en œuvre le procédé selon l'invention, basé sur le modèle d'état particulier présenté ci-dessus.

Le procédé de pistage selon l'invention utilise deux vecteurs d'état appartenant à deux espaces différents, l'un à 16 dimensions dit espace 16, l'autre à 12 dimensions dit espace 12 :

- le vecteur d'état $X_{16}$ utilisé par le modèle d'état particulier à l'invention lors des étapes de prédiction 41 ;

- un vecteur d'état $X_{12} = [x, y, z, \dot{x}, \dot{y}, \dot{z}, \ddot{x}, \ddot{y}, \ddot{z}, \dddot{x}, \dddot{y}, \dddot{z}]^T$ utilisé par l'étape de filtrage 42 et contenant la position, la vitesse, l'accélération et la dérivée de l'accélération (dite jerk) de la cible dans le repère absolu.

Ces deux vecteurs d'état, appartenant à deux espaces différents, sont propres à une même cible.

L'exploitation de ces deux vecteurs d'état, l'un pour la prédiction 41 et l'autre pour le filtrage 42, impose l'utilisation d'autres blocs : un bloc de passage 43 de l'espace 12 à l'espace 16 et un bloc de passage 44 de l'espace 16 à l'espace 12. A ces blocs, s'ajoute un bloc incrémentation 40.

Dans le traitement de pistage décrit par la figure 4, on discrétise à des instants k successifs la description définie par la relation (2), comme cela sera décrit par la suite.

On décrit maintenant successivement les différents blocs de traitement du procédé selon l'invention. Ces blocs mettent en œuvre des étapes du procédé selon l'invention. Ils sont par ailleurs intégrés dans les moyens de traitement du radar.

Bloc d'incrémentation

Le bloc d'incrémentation 40 prend en entrée :

- $\hat{X}_{16,k|k}$ le vecteur d'état estimé à l'instant $k$ sachant $k$ contenant les 16 éléments décrits précédemment,
- $P_{16,k|k}$ la matrice de covariance estimée à l'instant $k$ sachant $k$ contenant 16x16 éléments,
- $\hat{X}_0, P_0$ le vecteur d'état initial et la matrice de covariance initiale nécessaires au démarrage du pistage.

Il délivre en sortie :

- $\hat{X}_{16,k\text{-}1|k\text{-}1}$ le vecteur d'état filtré à l'instant ($k$ - 1) sachant ($k$ - 1) contenant les 16 éléments,
- $P_{16,k\text{-}1|k\text{-}1}$ la matrice de covariance filtrée à l'instant ($k$ - 1) sachant ($k$ - 1) contenant 16x16 éléments.

L'algorithme du filtre de Kalman étendu étant récursif, la prochaine prédiction à l'instant k est réalisée à partir des données du précédent filtrage à l'instant ($k$ - 1). L'étape d'incrémentation consiste à incrémenter l'indice temporel k de 1 :

$$k \leftarrow k + 1$$

Ainsi, les données de l'instant $k$ deviennent les données à l'instant ($k$ - 1). Un cas particulier existe lors du démarrage de l'algorithme, c'est-à-dire *pour k* = 0. Dans ce cas, on utilise les entrées $\hat{X}_0$, $P_0$ fournies par le radar pour définir $\hat{X}_{16,0|0}$ et $P_{16,0|0}$ :

$$\hat{X}_{16,0|0} = \hat{X}_0$$

$$P_{16,0|0} = P_0$$

Ces valeurs de démarrage ont une influence sur les performances du procédé de pistage et elles sont passées comme paramètres d'entrée du procédé.

Bloc de prédiction

Le bloc de prédiction 41 prend en entrée :

- $\hat{X}_{16,k\text{-}1|k\text{-}1}$ le vecteur d'état filtré à l'instant *(k* - 1) sachant ($k$ - 1) contenant les 16 éléments ;
- $P_{16,k\text{-}1|k\text{-}1}$ la matrice de covariance filtrée à l'instant ($k$ - 1) sachant ($k$ - 1) contenant 16x16 éléments ;
- Les paramètres $\sigma_\kappa$, $\sigma_\tau$ et $\sigma_{aT}$.

Il délivre en sortie :

- $\hat{X}_{16,k|k\text{-}1}$ le vecteur d'état prédit *a priori* à l'instant $k$ sachant *(k* - 1) contenant 16 éléments,
- $P_{16,k|k\text{-}1}$ la matrice de covariance prédite à l'instant $k$ sachant ($k$ - 1) contenant 16x16 éléments,

Plus particulièrement, il prédit $\hat{X}_{16,k|k-1}$ à partir de $\hat{X}_{16,k-1|k-1}$, selon la relation suivante :

$$\hat{X}_{16,k|k-1} = f\big(\hat{X}_{16,k-1|k-1}\big) = \begin{bmatrix} I_3 & C_{3,9} & 0_{3,4} \\ 0_{9,3} & R & 0_{9,4} \\ 0_{4,3} & 0_{4,9} & D_4 \end{bmatrix} \hat{X}_{16,k-1|k-1} \qquad (3)$$

avec :

$$C_{3,9} = \begin{bmatrix} c_{11} I_3 & c_{12} I_3 & c_{13} I_3 \end{bmatrix}$$

$$R = \begin{bmatrix} r_{11} I_3 & r_{12} I_3 & r_{13} I_3 \\ r_{21} I_3 & r_{22} I_3 & r_{23} I_3 \\ r_{31} I_3 & r_{32} I_3 & r_{33} I_3 \end{bmatrix}$$

et

$$D_4 = \begin{bmatrix} 1 & 0 & 0 & 0 \\ 0 & 1 & 0 & 0 \\ 0 & 0 & 1 & T_r \\ 0 & 0 & 0 & 1 \end{bmatrix}$$

La matrice $C_{3,9}$, à 3 lignes et 9 colonnes, décrit l'évolution de la position de la cible (définie par ses coordonnées $x\ y\ z$ dans le repère absolu) entre l'instant k et l'instant k - 1, en fonction des vecteurs de la base de Frenet $(\vec{T},\vec{N},\vec{B})$ à l'instant k-1. La sous-matrice $C_{11}\ I_3$ décrit l'évolution de la position par rapport au vecteur $\vec{T}$. De même les sous-matrices $c_{12}\ I_3$ et $c_{13}\ I_3$ décrivent l'évolution de la position respectivement par rapport aux vecteurs $\vec{N}$ et $\vec{B}$. Plus précisément selon la matrice descriptive de la relation (3), par l'étape de prédiction, l'évolution de la position de la cible entre deux instants k - 1, k est fonction des vecteurs de la base de Frenet à l'instant k - 1. La présentation détaillée des coefficients $c_{11}$, $c_{12}$ et $c_{13}$ en annexe montre que cette évolution dépend des quatre derniers paramètres du vecteur d'état $\kappa, \tau, \nu, a_T$, c'est-à-dire de la courbure de la trajectoire, de la torsion de la trajectoire, de la norme de la vitesse et de l'accélération tangentielle de la cible, mais aussi du temps $T_r$ entre deux instants k - 1, k.

La matrice R décrit l'application caractérisant l'évolution des vecteurs de la base de Frenet définis par leurs composantes $t_x\ t_y\ t_z\ n_x\ n_y\ n_z\ b_x\ b_y\ b_z$. La présentation détaillée des coefficients de la matrice R en annexe montre également que cette évolution dépend de la courbure de la trajectoire, de la torsion de la trajectoire, de la norme de la vitesse et de l'accélération tangentielle de la cible, ainsi que du temps $T_r$ entre deux instants k - 1, k.

Enfin, la matrice $D_4$ caractérise l'évolution des quatre éléments restant $\kappa, \tau, \nu, a_T$ du vecteur d'état $X_{16}$. Par $D_4$, $\kappa, \tau$ et $a_T$ restent inchangés et $\nu$ est transformée en $\nu + T_r \cdot a_T$.

La prédiction de $P_{16,k|k-1}$ en fonction de $\hat{X}_{16,k-1|k-1}$ est obtenue selon la relation suivante :

$$P_{16,k|k-1} = F_{k-1}\ P_{16,k-1|k-1}\ F_{k-1}^T + Q_{k-1}$$

avec :

$$F_{k-1} = \left.\frac{\partial f(X)}{\partial X}\right|_{X=\hat{X}_{k-1|k-1}}$$

où

$$\frac{\partial f(X)}{\partial X} = \begin{bmatrix} I_3 & c_{11}I_3 & c_{12}I_3 & c_{13}I_3 & j_1 & 0_{3,1} \\ 0_3 & r_{11}I_3 & r_{12}I_3 & r_{13}I_3 & j_2 & 0_{3,1} \\ 0_3 & r_{21}I_3 & r_{22}I_3 & r_{23}I_3 & j_3 & 0_{3,1} \\ 0_3 & r_{31}I_3 & r_{32}I_3 & r_{33}I_3 & j_4 & 0_{3,1} \\ 0_3 & 0_3 & 0_3 & 0_3 & I_3 & \begin{bmatrix} 0 \\ 0 \\ T_r \end{bmatrix} \\ 0_{1,3} & 0_{1,3} & 0_{1,3} & 0_{1,3} & 0_{1,3} & 1 \end{bmatrix}$$

et :

$$Q_{k-1} = \begin{bmatrix} 0_{12} & & 0_{12,4} & & \\ 0_{4,12} & \begin{bmatrix} \sigma_\kappa^2 & 0 & 0 & 0 \\ 0 & \sigma_\tau^2 & 0 & 0 \\ 0 & 0 & \sigma_{a_T}^2 \cdot T_r^2 & \sigma_{a_T}^2 \cdot T_r \\ 0 & 0 & \sigma_{a_T}^2 \cdot T_r & \sigma_{a_T}^2 \end{bmatrix} \end{bmatrix}$$

où $0_{12}$, $0_{4,12}$ et $0_{12,4}$ sont des matrices nulles complétant la matrice $Q_{k-1}$. $\sigma_\kappa^2$, $\sigma_\tau^2$ et $\sigma_{a_T}^2$ sont des paramètres d'entrée du bloc de prédiction 41. Les définitions des composantes de la matrice $\dfrac{\partial f(X)}{\partial X}$ sont présentées en annexe.

$$F_{k-1} = \left.\frac{\partial f(X)}{\partial X}\right|_{X=\hat{X}_{k-1|k-1}}$$

Les matrices et $Q_{k-1}$ décrivent respectivement la matrice Jacobienne contenant les dérivées partielles de la fonction f(X) au point $X = \hat{X}_{k-1|k-1}$ et la matrice de covariance des bruits du modèle d'état.

Bloc de passage de l'espace 16 à l'espace 12

Ce bloc 44 réalise le passage de la représentation d'état par les vecteurs de l'espace 16 à la représentation d'état par les vecteurs de l'espace 12. Il permet de fournir les vecteurs d'état de l'espace 12 au bloc de filtrage 42.

Il prend en entrée :

- $\hat{X}_{16,k|k-1}$ le vecteur d'état prédit *a priori* à l'instant *k* sachant *(k* - 1) contenant 16 éléments,
- $P_{16,k|k-1}$ la matrice de covariance prédite à l'instant *k* sachant *(k* - 1) contenant 16x16 éléments,

Il délivre en sortie :

- $\hat{X}_{12,k|k-1}$ le vecteur d'état prédit *a priori* à l'instant *k* sachant *(k* - 1) contenant 12 éléments, selon la relation $\hat{X}_{12,k|k-1}$ = $g_{16\rightarrow12}$ $(\hat{X}_{16,k|k-1})$ ;

- $P_{12,k|k-1}$ la matrice de covariance prédite à l'instant *k* sachant *(k* - 1) contenant 12x12 éléments, $P_{12,k|k-1}$ étant obtenue selon la relation suivante $P_{12,k|k-1} = G_{16\rightarrow12}\, P_{16,k|k-1}\, G_{16\rightarrow12}^T$. $P_{12,k|k-1}$

La fonction de passage $g_{16\rightarrow12}$ et la matrice Jacobienne $G_{16\rightarrow12}$ contenant les dérivées partielles de la fonction $g_{16\rightarrow12}$ au point $X = \hat{X}_{16,k|k-1}$ sont décrites en annexe.

Bloc de filtrage

Le bloc de filtrage 42 prend en entrée :

- $\hat{X}_{12,k|k-1}$ le vecteur d'état prédit *a priori* à l'instant *k* sachant *(k* - 1) contenant 12 éléments, issu du bloc de prédiction 41 après passage dans l'espace 12 ;
- $P_{12,k|k-1}$ la matrice de covariance prédite à l'instant *k* sachant *(k* - 1) contenant 12x12 éléments, issue du bloc de prédiction 41 après passage dans l'espace 12 ;
- $Y_k$ le vecteur d'état de l'observation du système à l'instant k, issu des mesures relatives à la cible effectuées par le radar ;
- $R_k$ la matrice de covariance des bruits de mesure associée à l'observation du système $Y_k$ à l'instant k,

Il fournit en sortie :

- $\hat{X}_{12,k|k}$ le vecteur d'état estimé à l'instant *k* sachant *k* contenant 12 éléments,
- $P_{12,k|k}$ la matrice de covariance estimée à l'instant *k* sachant *k* contenant 12x12 éléments,

Il réalise classiquement les quatre étapes calculatoires suivantes :

1. $H_k = \left.\dfrac{\partial h(X_{12})}{\partial X_{12}}\right|_{X_{12}=\hat{X}_{12,k|k-1}}$

2. $K_k = P_{12,k|k-1}\, H_k^T \left(H_k\, P_{12,k|k-1}\, H_k^T + R_k\right)^{-1}$

3. $\hat{X}_{12,k|k} = \hat{X}_{12,k|k-1} + K_k \left(Y_k - h\big(\hat{X}_{12,k|k-1}\big)\right)$

4. $P_{12,k|k} = (I - K_kH_k)P_{12,k|k-1}$, où la formule dite de « Joseph »

$$P_{12,k|k} = (I - K_kH_k)P_{12,k|k-1}(I - K_kH_k)^T + K_kR_kK_k^T$$

La fonction d'observation $h(\cdot)$ change en fonction de la nature de l'observation. Dans le cas d'une mesure fournie par un radar Doppler, le vecteur de mesure est :

$$Y_k = [d, g, s, v_r]$$

où :

- d est la distance relative entre le radar et la cible ;
- $g$ et s sont respectivement le gisement et le site associés à la direction de la cible par rapport au radar ;
- $v_r$ est la vitesse radiale relative de la cible mesurée par le traitement Doppler par rapport au radar.

Il est à noter que lorsque le porteur du radar fournissant l'observation de la cible est en mouvement, la mesure est donnée dans un repère relatif au porteur différent du repère absolu utilisé pour réaliser la prédiction du vecteur d'état. Dans ce cas, un calcul de compensation du porteur est nécessaire en amont du filtrage pour exprimer le vecteur d'état prédit $\hat{X}_{12,k|k-1}$ et la matrice de covariance prédite $P_{12,k|k-1}$ dans le repère relatif au porteur avant d'appliquer la fonction d'observation. De plus, après le filtrage, il faut exprimer les sorties, le vecteur d'état filtré $\hat{X}_{12,k|k}$ et la matrice de covariance filtrée $P_{12,k|k}$, dans le repère absolu nécessaire pour la prochaine prédiction. En complément, lorsque le radar fournit à l'instant k plusieurs mesures, il est possible d'appliquer en amont du filtrage une étape d'association décidant laquelle de ces mesures doit être utilisée pour filtrer l'estimateur.

### Bloc de passage de l'espace 12 à l'espace 16

Ce bloc 43 réalise le passage de la représentation d'état par les vecteurs dans l'espace 12 à la représentation d'état par les vecteurs dans l'espace 16. Il permet de fournir les vecteurs d'état de l'espace 16 au bloc de prédiction 41.

Le bloc « Passage 12→16 » prend en entrée :

- $\hat{X}_{12,k|k}$ le vecteur d'état estimé à l'instant $k$ sachant $k$ contenant 12 éléments,
- $P_{12,k|k}$ la matrice de covariance estimée à l'instant $k$ sachant $k$ contenant 12x12 éléments,

Il délivre en sortie :

- $\hat{X}_{16,k|k}$ le vecteur d'état estimé à l'instant $k$ sachant $k$ contenant 16 éléments, où $\hat{X}_{16,k|k} = g_{12\to16}(\hat{X}_{12,k|k})$ ;
- $P_{16,k|k}$ la matrice de covariance estimée à l'instant $k$ sachant $k$ contenant 16x16 éléments, où

$$P_{16,k|k} = G_{12\to16}\, P_{12,k|k}\, G_{12\to16}^T.$$

La fonction de passage $g_{12\to16}$ et la matrice Jacobienne $G_{12\to16}$ contenant les dérivées partielles de la fonction $g_{12\to16}$ au point $X = \hat{X}_{12,k|k}$ sont décrites en annexe.

Le vecteur d'état $\hat{X}_{16,k|k}$ est le vecteur d'état $\hat{X}_{16}$ estimé à l'instant k, comportant les informations de pistage contenues dans ce vecteur d'état. A chaque instant k, le procédé selon l'invention délivre ainsi la position estimée de la cible (composantes $x$ $y$ $z$ du vecteur $\hat{X}_{16}$), le vecteur vitesse de la cible (composantes $t_x$ $t_y$ $t_z$, et $v$ du vecteur $\hat{X}_{16}$), l'accélération tangentielle à la trajectoire (composante $a_T$ du vecteur $\hat{X}_{16}$) et les paramètres de trajectoire (courbure et torsion données par les composantes $\kappa,\ \tau$ du vecteur $\hat{X}_{16}$).

Dans une variante de mise en œuvre, il est possible de prendre le vecteur d'état $\hat{X}_{12,k|k}$ en sortie du bloc de filtrage, exprimé dans l'espace 12, pour délivrer les informations de pistage. Les informations de pistage sont alors les composantes du vecteur d'état $\hat{X}_{12}$ estimé (position, vitesse, accélération et jerk de la cible).

Le vecteur $\hat{X}_{16,k|k}$ et la matrice $P_{16,k|k}$ sont par ailleurs les données d'entrée du bloc d'initialisation 40 dans le processus récursif du filtre de Kalman étendu.

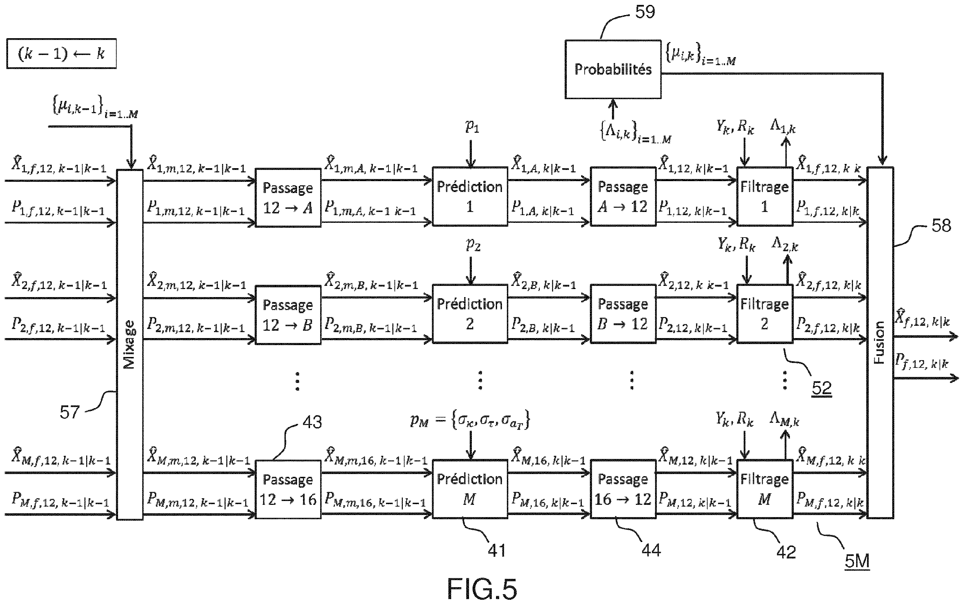

La figure 5 présente une variante de mise en œuvre d'un procédé de pistage selon l'invention. Dans ce cas, les blocs de traitement 41, 42, 43, 44 de la figure 4 sont intégrés dans un système de pistage plus complexe appelé IMM (« Interacting Multiples Models »). Le système de pistage utilise M filtres de Kalman étendus 51, 52, 5M dont celui de la figure 4 utilisant le modèle d'état particulier décrit relativement à cette figure. Un objectif du système illustré par la figure 5 est de couvrir plusieurs modes de cinématique de cibles à pister par l'utilisation de modèles d'états complémentaires.

Le bloc mixage 57 prend en entrée les M vecteurs d'état et les M matrices de covariance en sortie des blocs de filtrage, exprimés dans l'espace 12, pour les mixer en M vecteurs d'état et M matrices de covariance par sommation pondérée par les probabilités conditionnelles de chaque modèle. La présentation détaillée du mixage en annexe montre qu'elle dépend des probabilités en sortie du bloc 59 et de la chaine de Markov passée comme paramètre d'entrée du procédé de pistage. Les M vecteurs d'état mixés et les M matrices de covariance mixées sont par ailleurs les données d'entrée des blocs de passage de l'espace 12 à l'espace utilisé par chaque modèle.

Le bloc fusion 58 prend également en entrée les M vecteurs d'état et les M matrices de covariance en sortie des blocs de filtrage, exprimés dans l'espace 12, pour les fusionner en un seul vecteur d'état et une seule matrice de covariance. La présentation détaillée de la fusion en annexe montre qu'elle dépend des probabilités en sortie du bloc 59.

Le bloc probabilités 59 prend en entrée les M vraisemblances en sortie des M blocs de filtrage, les M probabilités à l'instant k - 1 et la chaine de Markov passée comme paramètre d'entrée du procédé de pistage, pour délivrer en sortie les M probabilités à l'instant k.

## REFERENCES

[1] R. A. Singer, «Estimating Optimal Tracking Filter Performance for Manned Maneuvering Targets,» IEEE Transactions on Aerospace and Electronics Systems, Vols. %1 sur %2AES-6, n° %14, pp. 473-483, July 1970.

[2] X. R. Li et Y. Bar-Shalom, «Design of an Interacting Multiple Model Algorithm for Air Traffic Control Tracking,» IEEE Transactions on Control Systems Technology, vol. 1, n° %13, pp. 186-194, September 1993.

[3] A. Gelb, Applied Optimal Estimation, MIT Press, 1974.

[4] X. R. Li et V. P. Jilkov, «Survey of Maneuvrering Target Tracking. Part I : Dynamic Models,» IEEE Transactions on Aerospace and Electronic Systems, vol. 39, n° %14, pp. 1333-1364, Octobre 2003.

[5] R. A. Best et J. P. Norton, «A New Model and Efficient Tracker for a Target with Curvilinear Motion,» IEEE Transactions on Aerospace and Electronic Systems, vol. 33, n° %13, pp. 1030-1037, July 1997.

[6] S. S. Blackman et R. F. Popoli, Design and Analysis of Modern Tracking Systems, Boston, MA: Artech House, 1999.

[7] R. S. Bryan, «Cooperative estimation of targets by multple aircraft,» Wright-Patterson AFB, Ohio, 1980.

[8] G. A. Watson et W. D. Blair, «IMM algorithm for tracking targets that maneuver,» Proceedings of the 1992 SPIE Conférence on Signal and Data Processing for Small Targets, vol. 1698, pp. 236-247, 1992.

[9] S. J. Asseo et R. J. Ardila, «Sensor independant target state estimator design and evaluation,» Procceedings of the National Aerospace and Electronics Conference (NAECON), pp. 916-924, 1982.

## Revendications

1. Procédé de pistage d'une cible (2, 32) par un radar, comportant :

   - une étape d'émission de signaux (3) vers ladite cible ;
   - une étape de réception des signaux rétrodiffusés par ladite cible, et d'obtention de mesures relatives à ladite cible à partir desdits signaux rétrodiffusés ;
   - une étape d'estimation de paramètres de la trajectoire (31) de ladite cible par application d'un filtre de Kalman étendu
   **caractérisé en ce que** ladite étape d'estimation comporte une étape de prédiction (41) et une étape de filtrage (42) itérées selon un incrément temporel :

• l'étape de prédiction (41) ayant en entrée un premier vecteur d'état, issu de l'étape de filtrage, contenant les coordonnées *x, y, z* de la position de ladite cible dans un repère absolu, les composantes $t_x,t_y,t_z,n_x,n_y,n_z,b_x,b_y,b_z$ des vecteurs de base d'un repère de Frenet lié à ladite cible, la courbure $\kappa$ et la torsion $\tau$ de ladite trajectoire (31), la norme *v* de la vitesse de ladite cible et l'accélération tangentielle $a_T$ à ladite trajectoire ;
• l'étape de filtrage (42), ayant en entrée :

    i. un deuxième vecteur d'état, issu de l'étape de prédiction, contenant les coordonnées de position *x, y, z*, de vitesse $\dot{x},\dot{y},\dot{z}$, d'accélération $\ddot{x},\ddot{y},\ddot{z}$ et de dérivée de l'accélération $\dddot{x},\dddot{y},\dddot{z}$ de ladite cible dans ledit repère absolu ;
    ii. lesdites mesures relatives à la cible échantillonnées selon ledit incrément temporel ;

le vecteur d'état issu de l'étape de filtrage (41) comportant les paramètres estimés de ladite trajectoire (31).

2. Procédé de pistage selon la revendication 1, **caractérisé en ce qu'**il comporte en outre :

    - une étape (44) de transformation, dite 16 vers 12, transformant les seize composantes du premier vecteur d'état issu de ladite étape de prédiction (41) en douze composantes formant le deuxième vecteur d'état ;
    - une étape (43), dite 12 vers 16, transformant les douze composantes du deuxième vecteur d'état issu de ladite étape de filtrage (42) en seize composantes formant le premier vecteur d'état.

3. Procédé de pistage selon les revendications 1 et 2, **caractérisé en ce que** le premier vecteur d'état en sortie de ladite étape (43), dite 12 vers 16, fournit les paramètres estimés de ladite trajectoire.

4. Procédé de pistage selon l'une quelconque des revendications précédentes, **caractérisé en ce que** lesdites mesures relatives à la cible sont :

    - la distance relative entre ledit radar et ladite cible ;
    - le gisement et le site associés à la direction de ladite cible par rapport audit radar ;
    - la vitesse radiale relative de ladite cible par rapport audit radar.

5. Procédé de pistage selon l'une quelconque des revendications précédentes, **caractérisé en ce que** :

    - l'étape de prédiction (41) a en entrée une première matrice de covariance, issue de l'étape de filtrage ;
    - l'étape de filtrage (42), a en entrée :

        • une deuxième matrice de covariance, issue de l'étape de prédiction ;
        • une matrice de covariance des bruits de mesure,

les dites étapes étant effectuées de manière itérative.

6. Procédé de pistage selon l'une quelconque des revendications précédentes, **caractérisé en ce que** les composantes du premier vecteur d'état en sortie de l'étape de prédiction (41), échantillonnées à un instant k, sont fonction des composantes du premier vecteur d'état en entrée de l'étape de filtrage, échantillonnées à l'instant précédent k-1 :

    - les coordonnées de position *x,y,z* de ladite cible dans ledit repère absolu évoluant entre l'instant k - 1 et l'instant k comme l'évolution de position de ladite cible par rapport aux vecteurs de ladite base de Frenet à l'instant k - 1, ladite évolution de position étant fonction de la courbure $\kappa$ de la trajectoire, de la torsion $\tau$ de la trajectoire, de la norme *v* de la vitesse et de l'accélération tangentielle $a_T$ à la trajectoire de ladite cible à l'instant k - 1, et du temps $T_r$ entre les deux instants k - 1, k ;
    - les composantes $t_x,t_y,t_z,n_x,n_y,n_z,b_x,b_y,b_z$ des vecteurs de base dudit repère de Frenet évoluant entre l'instant k - 1 et l'instant k en fonction de la courbure $\kappa$ de la trajectoire, de la torsion $\tau$ de la trajectoire, de la norme *v* de la vitesse et de l'accélération tangentielle $a_T$ à la trajectoire de ladite cible à l'instant k - 1, et du temps $T_r$ entre les deux instants k - 1, k ;
    - la courbure $\kappa$ de la trajectoire et la torsion $\tau$ de la trajectoire restant inchangés entre l'instant k - 1 et l'instant k, et la norme *v* de la vitesse étant transformée en $v + T_r \cdot a_T$.

7. Procédé selon l'une quelconque des revendications précédentes, **caractérisé en ce que** ledit incrément temporel varie d'une itération à l'autre.

8. Radar, **caractérisé en ce qu'**il est apte à mettre en œuvre le procédé selon l'une quelconque des revendications précédentes.

**Patentansprüche**

1. Verfahren zum Verfolgen eines Ziels (2, 32) mit einem Radar, das Folgendes umfasst:

    - einen Schritt des Übertragens von Signalen (3) zu dem Ziel;
    - einen Schritt des Empfangens von von dem Ziel zurückgestreuten Signalen und des Einholens von Messwerten relativ zu dem Ziel auf der Basis der zurückgestreuten Signale;
    - einen Schritt des Schätzens von Parametern der Flugbahn (31) des Ziels durch Anwenden eines erweiterten Kalman-Filters,

    **dadurch gekennzeichnet, dass** der Schätzschritt einen Vorhersageschritt (41) und einen Filterungsschritt (42) umfasst, welche gemäß einem Zeitinkrement wiederholt werden:

    • wobei der Vorhersageschritt (41) am Eingang einen ersten Zustandsvektor aus dem Filterungsschritt hat, der Folgendes enthält: die Positionskoordinaten $x$, $y$, $z$ des Ziels in einem absoluten Bezugssystem, die Komponenten $t_x$, $t_y$, $t_z$, $n_x$, $n_y$, $n_z$, $b_x$, $b_y$, $b_z$ der Basisvektoren eines Frenet-Bezugssystems verbunden mit dem Ziel, die Kurve $\kappa$ und die Torsion $\tau$ der Flugbahn (31), die Norm $\upsilon$ der Geschwindigkeit des Ziels und die Tangentialbeschleunigung $\alpha_T$ zur Flugbahn;
    • wobei der Filterungsschritt (42) am Eingang Folgendes hat:

        i. einen zweiten Zustandsvektor aus dem Vorhersageschritt, der die Positionskoordinaten $x$, $y$, z, Geschwindigkeitskoordinaten $\dot{x}, \dot{y}, \dot{z}$, Beschleunigungskoordinaten $\ddot{x}, \ddot{y}, \ddot{z}$ und Beschleunigungsableitung $\dddot{x}, \dddot{y}, \dddot{z}$ des Ziels in dem absoluten Bezugssystem enthält;
        ii. die Messwerte relativ zu dem Ziel, abgetastet gemäß dem Zeitinkrement;

    wobei der Zustandsvektor aus dem Filterungsschritt (41) die geschätzten Parameter der Flugbahn (31) umfasst.

2. Verfolgungsverfahren nach Anspruch 1, **dadurch gekennzeichnet, dass** es ferner Folgendes umfasst:

    - einen Transformationsschritt (44), 16 zu 12 genannt, der die sechzehn Komponenten des ersten Zustandsvektors aus dem Vorhersageschritt (41) in zwölf Komponenten umwandelt, die den zweiten Zustandsvektor bilden;
    - einen Schritt (43), 12 zu 16 genannt, der die zwölf Komponenten des zweiten Zustandsvektors aus dem Filterungsschritt (42) in sechzehn Komponenten umwandelt, die den ersten Zustandsvektor bilden.

3. Verfolgungsverfahren nach Anspruch 1 und Anspruch 2, **dadurch gekennzeichnet, dass** der erste Zustandsvektor am Ausgang des Schrittes (43), 12 zu 16 genannt, die geschätzten Parameter der Flugbahn liefert.

4. Verfolgungsverfahren nach einem der vorherigen Ansprüche, **dadurch gekennzeichnet, dass** die Messwerte relativ zu dem Ziel wie folgt sind:

    - der relative Abstand zwischen dem Radar und dem Ziel;
    - die Peilung und der Standort in Assoziation mit der Richtung des Ziels in Bezug auf das Radar;
    - die relative radiale Geschwindigkeit des Ziels in Bezug auf das Radar.

5. Verfolgungsverfahren nach einem der vorherigen Ansprüche, **dadurch gekennzeichnet, dass**:

    - der Vorhersageschritt (41) am Eingang eine Kovarianzmatrix aus dem Filterungsschritt hat;
    - der Filterungsschritt (42) am Eingang Folgendes hat:

• eine zweite Kovarianzmatrix aus dem Vorhersageschritt;
• eine Kovarianzmatrix von Messrauschen,

wobei die Schritte auf iterative Weise durchgeführt werden.

6. Verfolgungsverfahren nach einem der vorherigen Ansprüche, **dadurch gekennzeichnet, dass** die Komponenten des ersten Zustandsvektors am Ausgang des Vorhersageschrittes (41), abgetastet zu einem Zeitpunkt k, von den Komponenten des ersten Zustandsvektors am Eingang des Filterungsschrittes abhängig sind, abgetastet zum vorherigen Zeitpunkt k-1:

- wobei sich die Positionskoordinaten $x, y,$ z des Ziels in dem absoluten Bezugssystem zwischen dem Zeitpunkt k-1 und dem Zeitpunkt k als die Positionsentwicklung des Ziels in Bezug auf die Vektoren der Frenet-Basis zum Zeitpunkt k-1 entwickeln, wobei die Positionsentwicklung von der Kurve $\kappa$ der Flugbahn, der Torsion $\tau$ der Flugbahn, der Norm $\upsilon$ der Geschwindigkeit und der Tangentialbeschleunigung $\alpha_T$ zur Flugbahn des Ziels zum Zeitpunkt k - 1 und der Zeit $T_r$ zwischen den beiden Zeitpunkten k - 1, k abhängig ist;
- wobei sich die Komponenten $t_x, t_y, t_z, n_x, n_y, n_z, b_x, b_y, b_z$ der Basisvektoren des Frenet-Bezugssystems zwischen dem Zeitpunkt k-1 und dem Zeitpunkt k in Abhängigkeit von der Kurve $\kappa$ der Flugbahn, der Torsion $\tau$ der Flugbahn, der Norm $\upsilon$ der Geschwindigkeit und der Tangentialbeschleunigung $\alpha_T$ zur Flugbahn des Ziels zum Zeitpunkt k-1 und der Zeit $T_r$ zwischen den beiden Zeitpunkten k-1, k entwickeln;
- wobei die Kurve $\kappa$ der Flugbahn und die Torsion $\tau$ der Flugbahn zwischen dem Zeitpunkt k-1 und dem Zeitpunkt k unverändert bleiben und wobei die Norm $\upsilon$ der Geschwindigkeit in $\upsilon + T_r \cdot \alpha_T$ umgewandelt wird.

7. Verfahren nach einem der vorherigen Ansprüche, **dadurch gekennzeichnet, dass** das Zeitinkrement von einer Iteration zur anderen variiert.

8. Radar, **dadurch gekennzeichnet, dass** es zum Implementieren des Verfahrens nach einem der vorherigen Ansprüche geeignet ist.

## Claims

1. Method for tracking a target (2, 32) by means of a radar, comprising:

- a step of transmitting signals (3) towards the target;
- a step of receiving signals which are backscattered by the target and obtaining measurements relating to the target from the backscattered signals;
- a step of estimating parameters of the trajectory (31) of the target by applying an extended Kalman filter,

**characterised in that** the estimation step comprises a prediction step (41) and a filtering step (42) which are iterated in accordance with a time increment:

• the prediction step (41) having at the input a first status vector which is from the filtering step and which contains the coordinates $x, y,$ z of the position of the target in an absolute reference system, the components $t_x, t_y, t_z,$ $n_x, n_y, n_z, b_x, b_y, b_z$ of the basis vectors of a Frenet reference system linked to the target, the curve $\kappa$ and the torsion $\tau$ of the trajectory (31), the standard $\upsilon$ of the speed of the target and the tangential acceleration $\alpha_T$ relative to the trajectory;
• the filtering step (42) having at the input:

i. a second status vector which is from the prediction step and which contains the position coordinates x, y, z, speed coordinates $\dot{x}, \dot{y}, \dot{z}$, acceleration coordinates $\ddot{x}, \ddot{y}, \ddot{z}$ and derivative coordinates of the acceleration $\dddot{x}, \dddot{y}, \dddot{z}$ of the target in the absolute reference system;
ii. the measurements relating to the target sampled in accordance with the time increment;

the status vector originating from the filtering step (41) comprising the estimated parameters of the trajectory (31).

2. Tracking method according to claim 1, **characterised in that** it further comprises:

- a transformation step (44) referred to as 16 to 12, which transforms the sixteen components of the first status vector from the prediction step (41) into twelve components which form the second status vector;
- a step (43), referred to as 12 to 16, which transforms the twelve components of the second status vector from the filtering step (42) into sixteen components which form the first status vector.

3. Tracking method according to claim 1 and claim 2, **characterised in that** the first status vector at the output of the step (43), referred to as 12 to 16, provides the estimated parameters of the trajectory.

4. Tracking method according to any one of the preceding claims, **characterised in that** the measurements relating to the target are:

- the relative distance between the radar and the target;
- the bearing and the site associated with the direction of the target relative to the radar;
- the relative radial speed of the target relative to the radar.

5. Tracking method according to any one of the preceding claims, **characterised in that**:

- the prediction step (41) has at the input a first covariance matrix, originating from the filtering step;
- the filtering step (42) has at the input:

• a second covariance matrix, originating from the prediction step;
• a covariance matrix of the measurement noises,

the steps being carried out in an iterative manner.

6. Tracking method according to any one of the preceding claims, **characterised in that** the components of the first status vector at the output of the prediction step (41), which are sampled at a time k, are a function of the components of the first status vector at the input of the filtering step, which are sampled at the preceding time k-1:

- the position coordinates $x, y, z$ of the target in the absolute reference system developing between the time k-1 and the time k as the development of the position of the target relative to the vectors of the Frenet basis at the time k-1, the position development being a function of the curve $\kappa$ of the trajectory, the torsion $\tau$ of the trajectory, the standard $\upsilon$ of the speed and the tangential acceleration $\alpha_T$ relative to the trajectory of the target at the time k-1, and the time Tr between the two times k-1, k;
- the components $t_x, t_y, t_z, n_x, n_y, n_z, b_x, b_y, b_z$ of the basis vectors of the Frenet reference system developing between the time k-1 and the time k as a function of the curve $\kappa$ of the trajectory, the torsion $\tau$ of the trajectory, the standard $\upsilon$ of the speed and the tangential acceleration $\alpha_T$ relative to the trajectory of the target at the time k-1, and the time T$r$ between the two times k-1, k;
- the curve $\kappa$ of the trajectory and the torsion $\tau$ of the trajectory remaining unchanged between the time k - 1 and the time k, and the standard $\upsilon$ of the speed being transformed into $\upsilon + Tr \cdot \alpha_T$.

7. Method according to any one of the preceding claims, **characterised in that** the time increment varies from one iteration to another.

8. Radar, **characterised in that** it is capable of implementing the method according to any one of the preceding claims.

FIG.1

FIG.2

Visualisation xyz

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1351069 A1
- US 2006224318 A1
- US 2009087029 A1

**Littérature non-brevet citée dans la description**

- **MARION PILTÉ et al.** *An innovative nonlinear filter for radar kinematic estimation of maneuvering targets in 2D*
- **R. A. SINGER.** Estimating Optimal Tracking Filter Performance for Manned Maneuvering Targets. *IEEE Transactions on Aerospace and Electronics Systems,* Juillet 1970, vol. %1 sur %2AES-6 (%14), 473-483
- **X. R. LI ; Y. BAR-SHALOM.** Design of an Interacting Multiple Model Algorithm for Air Traffic Control Tracking. *IEEE Transactions on Control Systems Technology,* Septembre 1993, vol. 1 (%13), 186-194
- **A. GELB.** Applied Optimal Estimation. MIT Press, 1974
- **X. R. LI ; V. P. JILKOV.** Survey of Maneuvrering Target Tracking. Part I : Dynamic Models. *IEEE Transactions on Aerospace and Electronic Systems,* Octobre 2003, vol. 39 (%14), 1333-1364
- **R. A. BEST ; J. P. NORTON.** A New Model and Efficient Tracker for a Target with Curvilinear Motion. *IEEE Transactions on Aerospace and Electronic Systems,* Juillet 1997, vol. 33 (%13), 1030-1037
- **S. S. BLACKMAN ; R. F. POPOLI.** Design and Analysis of Modern Tracking Systems. Artech House, 1999
- **R. S. BRYAN.** Cooperative estimation of targets by multple aircraft. *Wright-Patterson AFB,* 1980
- **G. A. WATSON ; W. D. BLAIR.** IMM algorithm for tracking targets that maneuver. *Proceedings of the 1992 SPIE Conférence on Signal and Data Processing for Small Targets,* 1992, vol. 1698, 236-247
- **S. J. ASSEO ; R. J. ARDILA.** Sensor independant target state estimator design and evaluation. *Procceedings of the National Aerospace and Electronics Conference (NAECON),* 1982, 916-924